**Europäisches Patentamt**

**European Patent Office**

**Office européen des brevets**

(19)

(11) Publication number: **0 130 688**
**B1**

(12) **EUROPEAN PATENT SPECIFICATION**

(45) Date of publication of patent specification: **07.01.88**

(51) Int. Cl.⁴: **F 16 F 1/36, B 60 G 11/10**

(21) Application number: **84303594.0**

(22) Date of filing: **29.05.84**

(60) Consolidated with **84902352.8/0176512**
(European application No./publication No.) by
decision dated **04.06.86.**

(54) Securing components to springs of composite material.

(30) Priority: **08.06.83 GB 8315704**

(43) Date of publication of application:
**09.01.85 Bulletin 85/02**

(45) Publication of the grant of the patent:
**07.01.88 Bulletin 88/01**

(84) Designated Contracting States:
**AT BE CH DE FR GB IT LI LU NL SE**

(56) References cited:
**EP-A-0 092 399**
**FR-E- 32 891**
**GB-A-1 266 421**
**US-A-1 852 132**
**US-A-3 891 197**
**US-A-3 900 357**

(73) Proprietor: **GKN TECHNOLOGY LIMITED**
**Birmingham New Road**
**Wolverhampton West Midlands WV4 6BW (GB)**

(72) Inventor: **Tucker-Peake, Adrian**
**Beggars Roost 17 Lancaster Avenue**
**Rubery Birmingham (GB)**

(74) Representative: **Dodd, Graham Marshall et al**
**Guest Keen and Nettlefolds plc Group Patents**
**and Licensing Department P.O. Box 55 Ipsley**
**House Ipsley Church Lane**
**Redditch Worcestershire B98 0TL (GB)**

Courier Press, Leamington Spa, England.

## Description

This invention relates to leaf springs of composite, fibre reinforced resin, material, and more particularly to the securing of other components to such springs by being clamped thereto. One example of a component which may be so secured to a spring, is an axle beam for use in an automotive vehicle, which typically is held to a leaf spring in the centre region thereof by clamping means such as U-bolts.

Whilst the clamping means, when tightened, holds the component in a fixed position relative to the spring, it is desirable to provide some form of locating means to provide a desired relative position between the spring and component during assembly. A further desirable provision is that of some form of resilient load distributing element between the clamped surfaces between the spring and component, to spread the load into the composite material of the spring and prevent the initiation of fatigue cracks into the spring material. The resilient element also, if bonded to the spring, resists penetration of dirt to the clamped surfaces of the spring and component, which would otherwise potentially cause abrasive damage to the surface of the spring.

It is the object of the present invention to meet these requirements as far as possible in a manner which is economical, convenient and effective in use, requiring a minimum of separate parts.

In US—A—3900357 there is disclosed a clamped assembly at the centre of a leaf spring of composite material, wherein a layer of abrasion resistant material is disposed between the spring surface and the clamped component. In EP—A—0092399, not published at the priority date of the present application, there is disclosed a clamped assembly of a leaf spring of composite material with an element of resilient material positioned adjacent the surface of the composite leaf. A separate locating element, e.g. of metal, engages a recess in the spring leaf and in the clamped component to determine the relative position of the component and spring. Such a separate locating element is inconvenient.

In FR—E—32891, there is disclosed a clamped assembly of a spring of metal leaves, with an element interposed between the clamped component and spring with projections on opposite sides, to position the component and spring relative to one another. The element does not have any load distributing nature, however, and therefore is not applicable to springs made of composite material.

According to the present invention, we provide an assembly comprising a leaf spring of composite material, a component and clamping means holding the component to the spring, and an element in the form of a sheet of resilient material interposed between the spring and component, characterised in that said element has, on one side, a protruding formation integral therewith and engaging in a recess in the spring, and on the other side a protruding formation integral therewith and engaging in a recess in the component.

By the use of such a resilient element in the assembly, the necessity of providing any other separate locating means operative between the spring and component to maintain them in the correct relative position during assembly is avoided. The resilient material preferably is a polyurethane rubber material, and, although such a material is not sufficiently strong to resist shear stresses imposed thereon if the clamping means permitted the component to move relative to the spring under loads when in service, in practice the clamping means does not permit any tendency towards such relative movement and hence the material is not excessively stressed. The provision of the protruding formations on opposite sides of the element of resilient material is adequate to ensure correct relative positioning between the spring and component during assembly.

Said one protruding formation may be of shallow frusto-conical or domed configuration, to engage with a recess of like form in the spring. The further protruding formation may be of cylindrical form, to engage in a cylindrical socket or aperture in the component.

The advantage of the formation, which engages with a recess in the spring, being of shallow frusto-conical or domed configuration is that such a form of recess can be incorporated in a composite spring during manufacture thereof in a moulding process without having a disadvantageous effect on the disposition of fibres in the spring. The characteristics of a composite spring are dependent inter alia on the fibre disposition in the spring, and to provide a deep recess therein or one with sharp corners would provide serious discontinuities in the fibres of a spring, adversely affecting the properties thereof. On the other hand, to provide a cylindrical socket or aperture in the component to be secured to the spring, which usually will be of iron, steel or aluminium, is not in general so disadvantageous.

A reinforcing member, e.g. a metal peg, may be incorporated in one or both of said formations of the element of resilient material.

The invention will now be described by way of example with reference to the accompanying drawings, of which:

Figure 1 is a side elevation of an assembly according to the invention;

Figure 2 shows a resilient element according to the invention.

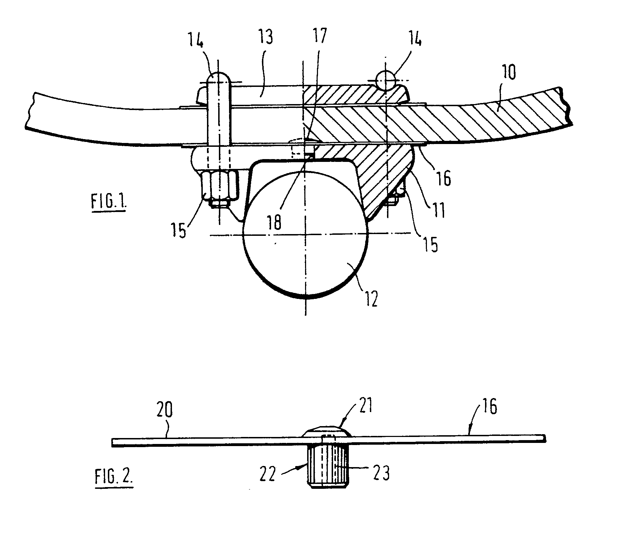

Referring firstly to Figure 1 of the drawings, this shows a central portion of a leaf spring 10, made of composite, fibre reinforced resin, material. By way of example, the spring may comprise glass fibres set in an epoxy resin, the spring being formed to its final shape in a moulding process during which the resin is cured. In a typical motor vehicle installation as illustrated a component 11, which here is a seat for an axle beam 12, is held to the spring in its central region by clamping means in the form of U-bolts 14 and nuts 15. On the side of the spring opposite the component 11, the U-bolts embrace an abutment plate 13.

An element 16 in the form of a sheet of a resilient material is interposed between the component 11, and the undersurface of the spring 10.

Referring now to Figure 2 of the drawings this shows in side elevation the element 16 comprising a flat sheet 20 of a resilient material such as an appropriate grade of polyurethane rubber. An example of a suitable material is Dunlop 'Prescollan 80-C-13', which has been found suitable for use generally in automotive spring installations. Clearly however the material would be selected so that its properties, e.g. hardness, are suitable for the particular installation under consideration.

On one side, the element has a protruding formation 21 in the form of two superimposed frusto-conical portions of different apex angle. On the opposite side, the element has a cylindrical protruding formation 22. These formations are integral with the flat sheet part 20 of the element and the whole element is manufactured by a moulding process.

When in use, the element is interposed between the surface of the composite spring 10 and the component 11 which is secured to the spring by being clamped thereto. The formations 21, 22 engage in a correspondingly shaped recess in the spring and socket or aperture 18 in the component, respectively. These provide for correct relative positioning between the spring and component during assembly. To prevent penetration of abrasive dirt to the spring surface, the element preferably is secured to the spring by use of a suitable adhesive.

The element may be reinforced by a metal peg or the like 23 occupying a bore formed in the element during moulding thereof. As illustrated, the reinforcing member extends through the formation 22 into the base of the formation 21.

An element in the form of a plain sheet of resilient material is interposed between the abutment plate 13 and spring 10. Such element has no protruding formations, since the requirement for alignment with the spring is with component 11 rather than plate 13.

## Claims

1. An assembly comprising a leaf spring (10) of composite material, a component (11) and clamping means (14, 15) holding the component to the spring, and an element (16) in the form of a sheet of resilient material interposed between the spring and component, characterised in that said element (16) has, on one side, a protruding formation (21) integral therewith and engaging in a recess (17) in the spring, and on the other side a protruding formation (22) integral therewith and engaging in a recess (18) in the component (11).

2. An assembly according to Claim 1 further characterised in that said resilient material is a polyurethane material.

3. An assembly according to Claim 1 or Claim 2 further characterised in that said one protruding formation (21) is of shallow domed or frusto-conical configuration, and said recess (17) in the spring is of like configuration.

4. An assembly according to any one of the preceding claims further characterised in that said other protruding formation (22) is of cylindrical configuration, and said recess (18) in the component (11) of like configuration.

5. An assembly according to any one of the preceding claims further characterised in that a reinforcing member (23) is provided in at least one of said formations (21, 22) of the element (16).

## Patentansprüche

1. Anordnung bestehend aus einer aus einem Verbundwerkstoff hergestellten Blattfeder (10), einem Teil (11), Klemmitteln (14, 15), die das Teil an der Feder halten, und einem Element (16) in Form eines zwischen der Feder und dem Teil angeordneten Blattes aus einem elastischen Werkstoff, dadurch gekennzeichnet, daß das Element (16) an einer Seite eine mit ihm einteilig hergestellte und in eine Ausnehmung (17) in der Feder eingreifende vorstehende Formation (21) und an seiner anderen Seite eine mit ihm einteilig hergestellte und in eine Ausnehmung (18) in dem Teil (11) eingreifende vorstehende Formation (22) aufweist.

2. Anordnung nach Anspruch 1, dadurch gekennzeichnet, daß der elastische Werkstoff ein Polyurethanwerkstoff ist.

3. Anordnung nach Anspruch 1 oder 2, dadurch gekennzeichnet, daß die eine vorstehende Formation (21) eine flache, gewölbte oder kegelstumpfförmige und die Ausnehmung (17) in der Feder eine entsprechende Konfiguration aufweist.

4. Anordnung nach einem der vorhergehenden Ansprüche, dadurch gekennzeichnet, daß die andere vorstehende Formation (22) eine zylindrische und die Ausnehmung (18) in dem Teil (11) eine entsprechende Formation aufweist.

5. Anordnung nach einem der vorhergehenden Ansprüche, dadurch gekennzeichnet, daß in wenigstens einer der Formationen (21, 22) des Elementes (16) ein Verstärkungskörper (23) vorgesehen ist.

## Revendications

1. Ensemble comportant un ressort à lame (10) en matériau composite, un composant (11) et des moyens de bridage (14, 15) qui fixent le composant au ressort, ainsi qu'un élément (16) sous forme d'une feuille d'un matériau élastique interposé entre le ressort et le composant, caractérisé en ce que ledit élément (16) présente, sur sa première face, une formation en saillie (21) d'une pièce avec lui et se logeant dans un évidement (17) du ressort et, sur son autre face, une formation en saillie (22) d'une pièce avec lui et se logeant dans un évidement (18) du composant (11).

2. Ensemble selon la revendication 1, caractérisé en outre en ce que ledit matériau élastique est un matériau à base de polyuréthane.

3. Ensemble selon la revendication 1 ou la revendication 2, caractérisé en outre en ce que ladite première formation en saillie (21) a une configuration en calotte ou en tronc de cône de faible hauteur; et en ce que ledit logement (17) dans le ressort à la même configuration.

4. Ensemble selon l'une quelconque des revendications précédentes, caractérisé en outre en ce que ladite formation en saillie (22) a une configuration cylindrique; et en ce que ledit évidement (18) dans le composant (11) a la même configuration.

5. Ensemble selon l'une quelconque des revendications précédentes, caractérisé en outre en ce qu'une pièce d'armature (23) est prévue dans au moins l'une desdites formations (21, 22) de l'élément (16).

FIG.1.

FIG. 2.